# EUROPEAN PATENT APPLICATION

(11) **EP 2 985 985 A1**
(43) Date of publication of application: **17.02.2016**
(21) Application number: 15180013.3
(22) Date of filing: 06.08.2015
(51) Int. Cl.: H04M 1/60, H04M 1/725, G07C 5/00

(54) **DRIVER STATUS INDICATOR**

(30) Priority: 14.08.2014 US 201414460258
(71) Applicant: Harman International Industries, Incorporated, Stamford, CT 06901 (US)
(72) Inventor: MALHOTRA, Manu, 560048 Bangalore (IN); MISHRA, Trisha, Nagpur-15 (IN); BAALU, Arvin, Bangalore (IN)
(74) Representative: Westphal, Mussgnug & Partner Patentanwälte mbB

(57) **Abstract**

Embodiments are disclosed for determining a driver status and presenting the driver status to a calling party. In some embodiments, an in-vehicle computing system of a vehicle includes a display, a processor, and a storage device that stores instructions executable by the processor to receive vehicle status data from one or more vehicle systems and sensors. The instructions may also be executable to determine one or more parameters of operation for the vehicle based on the received vehicle status data, compare the one or more parameters of operation for the vehicle to one or more driver status indicator, determine a driver status of a driver of the vehicle based on the comparison of the parameters to the driver status indicators, and selectively send the driver status to a server, the server being located remotely from the vehicle.

## Description

### FIELD

The disclosure relates to indicating a status of a driver of a vehicle.

### BACKGROUND

Drivers may carry a mobile device into a vehicle and/or otherwise be reachable by phone during driving. A calling party may initiate a phone call to the driver by looking up the driver in a contacts list of a caller's mobile device or entering the contact information for the driver into the caller's mobile device.

### SUMMARY

Embodiments are disclosed for determining a driver status and presenting the driver status to a calling party. As used herein, the term calling party may refer to a user and/or a device that initiates or intends to initiate (e.g., views a contact list) a call to a called party (e.g., another user/device). In some embodiments, an in-vehicle computing system of a vehicle includes a display, a processor, and a storage device that stores instructions executable by the processor to receive vehicle status data from one or more vehicle systems and sensors. The instructions may also be executable to determine one or more parameters of operation for the vehicle based on the received vehicle status data, compare the one or more parameters of operation for the vehicle to one or more driver status indicator, determine a driver status of a driver of the vehicle based on the comparison of the parameters to the driver status indicators, and selectively send the driver status to a server, the server being located remotely from the vehicle.

A mobile device of a calling party may include a display, a processor, and a storage device that stores instructions executable by the processor to send a request for a driver status associated with a selected driver. The instructions may also be executable to receive the driver status and display an indication of the driver status on the display of the mobile device, the indication including vehicle status information for a vehicle in which the selected driver is located.

A method for managing driver status information in a server may include receiving a request from a calling party for a driver status for a selected driver and retrieving the driver status and associated driver status information for the selected driver from a data storage device communicatively connected to the server, the associated driver status information including vehicle status information for a vehicle in which the selected driver is located. The method may further include sending the driver status and at least a subset of the associated driver status information to the calling party.

### BRIEF DESCRIPTION OF THE DRAWINGS

The disclosure may be better understood from reading the following description of non-limiting embodiments, with reference to the attached drawings, wherein below:
FIG. 1 shows an example partial view of an interior of a cabin of a vehicle in accordance with one or more embodiments of the present disclosure;
FIG. 2 shows a block diagram of a communication system including a driver status update module in accordance with one or more embodiments of the present disclosure;
FIG. 3 shows a block diagram of an in-vehicle computing system in accordance with one or more embodiments of the present disclosure;
FIG. 4 shows example driver statuses, indicators, and displayable icons in accordance with one or more embodiments of the present disclosure;
FIG. 5 shows an example user interface in accordance with one or more embodiments of the present disclosure.
FIG. 6 shows example privacy groups for information regarding a driver's status in accordance with one or more embodiments of the present disclosure;
FIG. 7 is a flow chart of a method for sending an updated driver status to a server or caller device in accordance with one or more embodiments of the present disclosure;
FIG. 8 is a flow chart of a method for determining a change in driver status in accordance with one or more embodiments of the present disclosure;
FIG. 9 is a flow chart of a method in a server for retrieving and sending driver status information in accordance with one or more embodiments of the present disclosure;
FIG. 10 is a flow chart of a method for requesting and receiving status updates for a driver in accordance with one or more embodiments of the present disclosure; and
FIGS. 11-14 are communication diagrams showing example communications transmitted for indicating a driver status in accordance with one or more embodiments of the present disclosure.

### DETAILED DESCRIPTION

Utilizing a telephone or messaging function of a mobile device while driving may be dangerous and/or restricted in certain regions. As a result, a driver may miss calls while travelling and sort through the calls after coming to a stop or otherwise reaching a safer location for returning phone calls. However, by the time the driver reaches such a location, the original caller may be unavailable, creating a potential "phone tag" situation in which neither party is able to reach the other party. In order to address the above issues, the present disclosure describes indicating a driver status to inform a calling party of the availability of a called party (e.g., a driver). Leveraging information from a vehicle's systems, in addition to other information sources, an in-vehicle computing system and/or other suitable computing device (e.g., a mobile phone/smartphone, a laptop, a tablet, a server, a desktop computing device, etc.) may determine a driver status which may indicate an ability of the driver to answer incoming calls.

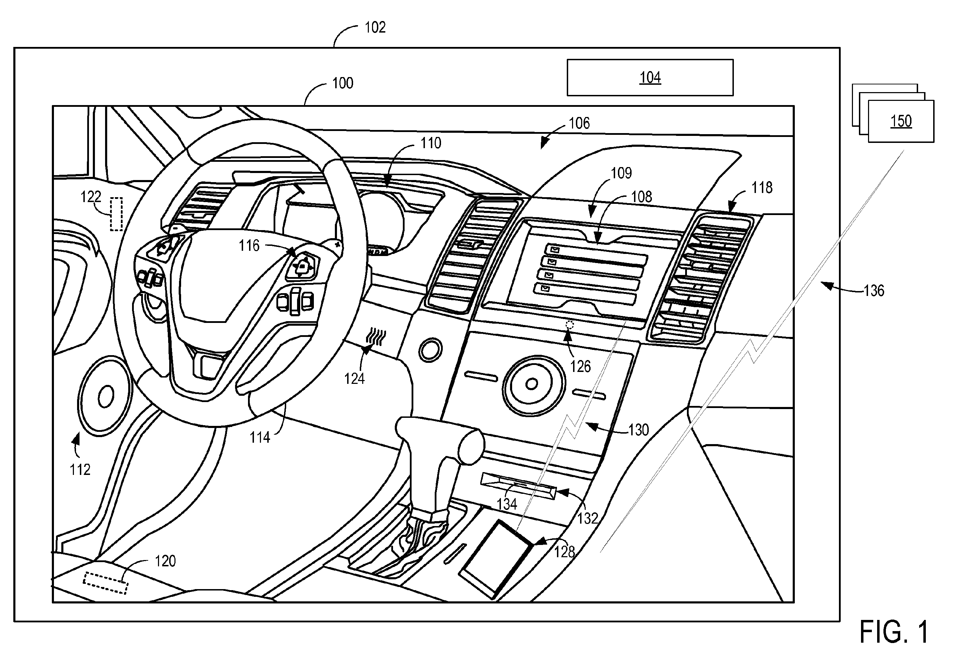

FIG. 1 shows an example partial view of one type of environment: an interior of a cabin 100 of a vehicle 102, in which a driver and/or one or more passengers may be seated. Vehicle 102 of FIG. 1 may be a motor vehicle including drive wheels (not shown) and an internal combustion engine 104. Internal combustion engine 104 may include one or more combustion chambers which may receive intake air via an intake passage and exhaust combustion gases via an exhaust passage. Vehicle 102 may be a road automobile, among other types of vehicles. In some examples, vehicle 102 may include a hybrid propulsion system including an energy conversion device operable to absorb energy from vehicle motion and/or the engine and convert the absorbed energy to an energy form suitable for storage by an energy storage device. Vehicle 102 may include a fully electric vehicle, incorporating fuel cells, solar energy capturing elements, and/or other energy storage systems for powering the vehicle.

As shown, an instrument panel 106 may include various displays and controls accessible to a driver (also referred to as the user) of vehicle 102. For example, instrument panel 106 may include a touch screen 108 of an in-vehicle computing system 109 (e.g., an infotainment system), an audio system control panel, and an instrument cluster 110. While the example system shown in FIG. 1 includes audio system controls that may be performed via a user interface of in-vehicle computing system 109, such as touch screen 108 without a separate audio system control panel, in other embodiments, the vehicle may include an audio system control panel, which may include controls for a conventional vehicle audio system such as a radio, compact disc player, MP3 player, etc. The audio system controls may include features for controlling one or more aspects of audio output via speakers 112 of a vehicle speaker system. For example, the in-vehicle computing system or the audio system controls may control a volume of audio output, a distribution of sound among the individual speakers of the vehicle speaker system, an equalization of audio signals, and/or any other aspect of the audio output. In further examples, in-vehicle computing system 109 may adjust a radio station selection, a playlist selection, a source of audio input (e.g., from radio or CD or MP3), etc., based on user input received directly via touch screen 108, or based on data regarding the user (such as a physical state and/or environment of the user) received via external devices 150 and/or mobile device 128.

In some embodiments, one or more hardware elements of in-vehicle computing system 109, such as touch screen 108, a display screen, various control dials, knobs and buttons, memory, processor(s), and any interface elements (e.g., connectors or ports) may form an integrated head unit that is installed in instrument panel 106 of the vehicle. The head unit may be fixedly or removably attached in instrument panel 106. In additional or alternative embodiments, one or more hardware elements of the in-vehicle computing system may be modular and may be installed in multiple locations of the vehicle.

Instrument cluster 110 may include various gauges such as a fuel gauge, tachometer, speedometer, and odometer, as well as indicators and warning lights. A steering wheel 114 may project from the instrument panel below instrument cluster 110. Optionally, steering wheel 114 may include controls 116 which may be used in conjunction with touch screen 108 to navigate features of an in-vehicle computing system and to control the in-vehicle computing system. In addition to the components depicted in FIG. 1, it will be appreciated that instrument panel 106 may include additional components such as door and window controls, a cigarette lighter which may also be used as a low-voltage power outlet, a glove compartment, and/or any other suitable elements. In one or more embodiments, control of in-vehicle climate (such as cabin temperature) via climate control system vents 118 may be performed using touch screen 108 and thus no separate climate control interface may be included in instrument panel 106. In alternative embodiments, however, a separate climate control interface may be provided.

The cabin 100 may include one or more sensors for monitoring the vehicle, the user, and/or the environment. For example, the cabin 100 may include one or more seat-mounted pressure sensors 120 configured to measure the pressure applied to the seat to determine the presence of a user. The cabin 100 may include one or more door sensors 122 configured to monitor door activity, such as the opening and/or closing of the door, the locking of the door, the operation of a window of the door, and/or any other suitable door activity event. A humidity sensor 124 may be included to measure the humidity content of the cabin. A microphone 126 may be included to receive user input in the form of voice commands, to enable a user to conduct telephone calls, and/or to measure ambient noise in the cabin 100. It is to be understood that the placement of the sensors illustrated in FIG. 1 is exemplary, and one or more additional or alternative sensors may be positioned in any suitable location of the vehicle. For example, additional sensors may be positioned in an engine compartment, on an external surface of the vehicle, and/or in other suitable locations for providing information regarding the operation of the vehicle, ambient conditions of the vehicle, a user of the vehicle, etc. Information regarding ambient conditions of the vehicle, vehicle status, or vehicle driver may also be received from sensors external to/separate from the vehicle (that is, not part of the vehicle system), such as from sensors coupled to external devices 150 and/or mobile device 128.

Cabin 100 may also include one or more user objects, such as mobile device 128, that are stored in the vehicle before, during, and/or after travelling. The mobile device may include a smart phone, a tablet, a laptop computer, a portable media player, and/or any suitable mobile computing device. The mobile device 128 may be connected to the in-vehicle computing system via communication link 130. The communication link 130 may be wired (e.g., via Universal Serial Bus [USB], Mobile High-Definition Link [MHL], High-Definition Multimedia Interface [HDMI], etc.) or wireless (e.g., via BLUETOOTH, WI-FI, Near-Field Communication [NFC], cellular connectivity, etc.) and configured to provide two-way communication between the mobile device and the in-vehicle computing system. For example, the communication link 130 may provide sensor and/or control signals from various vehicle systems (such as vehicle audio system, climate control system, etc.) and the touch screen 108 to the mobile device 128 and may provide control and/or display signals from the mobile device 128 to the in-vehicle systems and the touch screen 108. The communication link 130 may also provide power to the mobile device 128 from an in-vehicle power source in order to charge an internal battery of the mobile device.

While the mobile device 128 is illustrated as being spatially separated from the in-vehicle computing system and connected via a substantially external communication link (e.g., a cable or radiofrequency signal), it is to be understood that a slot 132 or other storage structure may be formed in the instrument panel 106 or other location in the vehicle to hold the mobile device in a particular location. The storage structure may include an integrated connector 134 to which the mobile device 128 may be attached or "docked" for providing a substantially internal communication link between the mobile device and the computing system.

In-vehicle computing system 109 may also be communicatively coupled to additional devices operated and/or accessed by the user but located external to vehicle 102, such as one or more external devices 150. In the depicted embodiment, external devices 150 are located outside of vehicle 102 though it will be appreciated that in alternate embodiments, external devices may be located inside cabin 100. The external devices may include a server computing system, personal computing system, portable electronic device, electronic wrist band, electronic head band, portable music player, electronic activity tracking device, pedometer, smart-watch, GPS system, etc. External devices 150 may be connected to the in-vehicle computing system via communication link 136 which may be wired or wireless, as discussed with reference to communication link 130, and configured to provide two-way communication between the external devices and the in-vehicle computing system. For example, external devices 150 may include one or more sensors and communication link 136 may transmit sensor output from external devices 150 to in-vehicle computing system 109 and touch screen 108. External devices 150 may also store and/or receive information regarding contextual data, user behavior/preferences, operating rules, etc. and may transmit such information from the external devices 150 to in-vehicle computing system 109 and touch screen 108.

In-vehicle computing system 109 may analyze the input received from external devices 150, mobile device 128, and/or other input sources and select settings for various in-vehicle systems (such as climate control system or audio system), provide output via touch screen 108 and/or speakers 112, communicate with mobile device 128 and/or external devices 150, and/or perform other actions based on the assessment. In some embodiments, all or a portion of the assessment may be performed by the mobile device 128 and/or the external devices 150.

In some embodiments, one or more of the external devices 150 may be communicatively coupled to in-vehicle computing system 109 indirectly, via mobile device 128 and/or another of the external devices 150. For example, communication link 136 may communicatively couple external devices 150 to mobile device 128 such that output from external devices 150 is relayed to mobile device 128. Data received from external devices 150 may then be aggregated at mobile device 128 with data collected by mobile device 128, the aggregated data then transmitted to in-vehicle computing system 109 and touch screen 108 via communication link 130. Similar data aggregation may occur at a server system and then transmitted to in-vehicle computing system 109 and touch screen 108 via communication link 136/130.

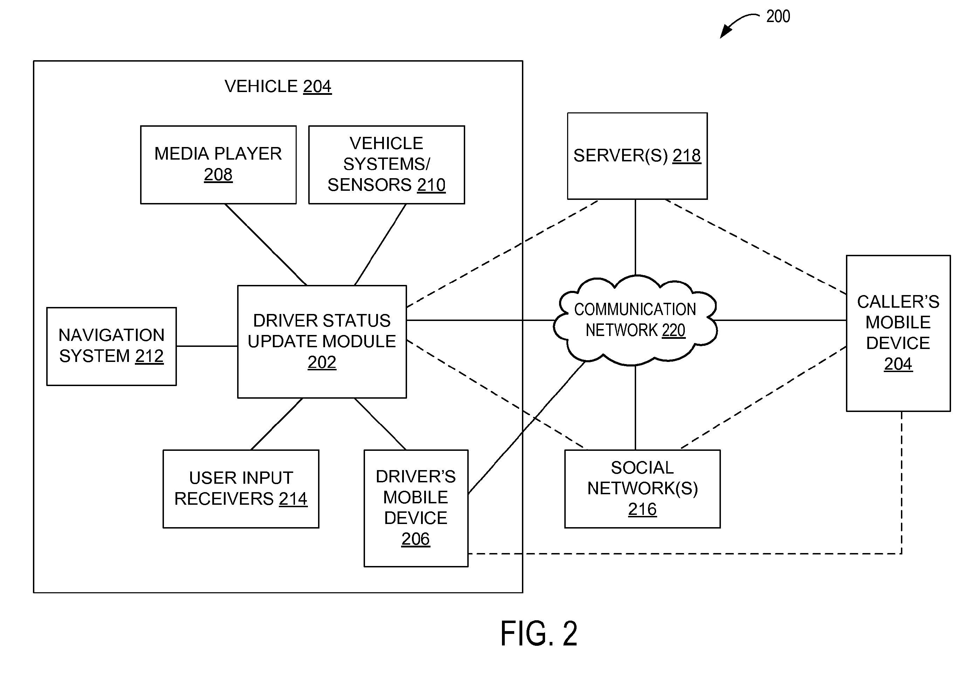

FIG. 2 shows a block diagram of communication system 200 including a driver status update module 202 for a computing system, such as in-vehicle computing system 109 of FIG. 1. Communication system 200 may enable a caller's mobile device 204 to communicate with a driver's mobile device 206 while keeping the caller informed of the status of the driver associated with the driver's mobile device 206. Driver status update module 202 may communicate with various information sources, such as media player 208, one or more vehicle systems and/or sensors 210, a navigation system 212, user input receivers 214 (e.g., actuators in the vehicle, such as an accelerator pedal, window/door controls, radio controls, climate controls, steering wheel controls, etc.), the driver's mobile device 206, one or more social networks 216, and/or any other suitable component that is capable of providing information indicative of a vehicle state and/or driver status. Driver status update module 202 may aggregate and process information from the plurality of sources to determine a driver status and/or to determine whether a driver status has changed from a previously determined status (e.g., an immediately prior/last determined status) using indicators related to the information sources. For example, the driver status update module 202 may monitor a vehicle speed by receiving vehicle speed data from one or more vehicle systems/sensors 210 and determine a driver status based on the vehicle speed data.

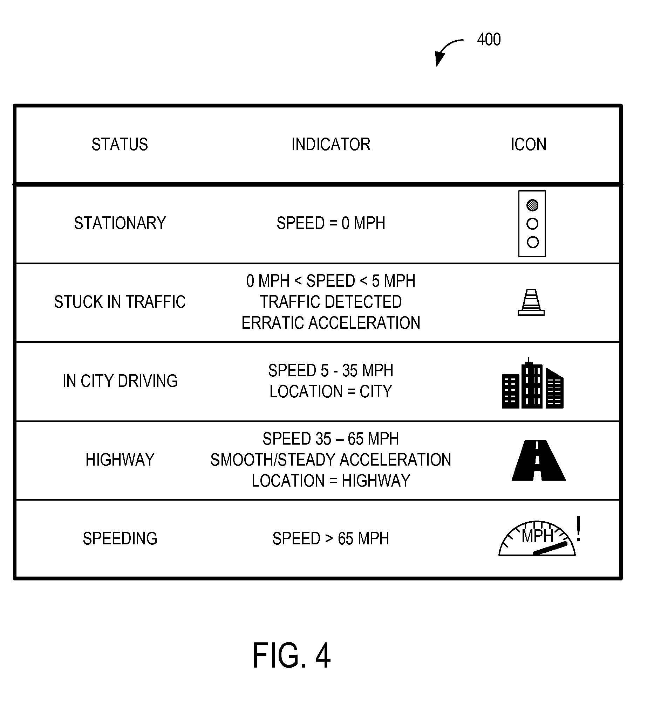

During initialization of a driver status (e.g., responsive to a driver entering a vehicle and/or starting an engine of the vehicle) and/or responsive to determining that a driver status has been updated, the driver status update module may send the driver status to one or more servers 218. A driver status server may include one or more storage devices for storing driver status information (e.g., a driver status, an associated driver identity, indicators used to determine the driver status, etc.). Accordingly, using the example described above regarding vehicle speed, the driver status update module 202 may send a driver status update to server(s) 218 responsive to determining that the vehicle speed has exceeded a threshold indicating a change in driver status. For example, a first driver status (e.g., "stationary") may correspond to a vehicle speed equal to zero, while another driver status (e.g., "in city driving") may correspond to a vehicle speed between 5 and 35 miles per hour (mph). Upon reaching a vehicle speed of 5 mph, for this example, the driver status update module 202 may send an updated status to the server(s) 218 indicating a driver/vehicle identity, a driver status of "in city driving," and optionally an indication that vehicle speed (or a particular vehicle speed) was utilized as the driver status indicator. Additional examples of driver statuses and associated indicators will be described in more detail below with respect to FIG. 4. The updated driver status may be propagated from the server(s) 218 to the caller's mobile device 204 in real-time (e.g., responsive to storing the updated status) and/or responsive to a request from the caller's mobile device. In some embodiments, the driver status update module 202 may provide information such as a driver status update directly to the caller's mobile device 204 (e.g., bypassing the servers 218) instead of or in addition to updating the server(s) 218. In additional or alternative embodiments, driver status updates may be provided to one or more social networks 216 (e.g., to update one or more of the driver's social networking profiles) via the driver status update module 202 and/or the server(s) 218. It is to be understood that in some embodiments, server(s) 218 may determine a driver status in addition to or as an alternative to the driver status update module 202. For example, the driver status update module may collect and/or process data that may serve as a driver status indicator (e.g., vehicle speed, acceleration, location, etc.) and send all relevant driver status data to server(s) 218 for further aggregation and processing. In such an example, the server(s) 218 may determine a driver status and/or determine whether a driver status has changed (e.g., by comparing the driver status indicator data to one or more thresholds and/or comparing the driver status to a previously-determined driver status).

As shown in FIG. 2, driver status update module may be connected to server(s) 218, social network(s) 216, and/or a caller's mobile device 204 via a communication network 220. It is to be understood that a plurality of communication networks may be utilized to provide the illustrated connections, and one or more elements may be directly connected. One or more devices, such as the caller's mobile device 204, may be capable of connected to other devices, such as server(s) 218, via multiple communication links. For example, a caller's mobile device may be connectable to the server(s) via a cellular network and/or via WiFi. Driver status update module 202 may be directly connectable to vehicle systems/sensors 210 via a controller area network (CAN) bus of the vehicle and/or via a radiofrequency communication link. Driver status update module 202 may be connectable to the driver's mobile device via BLUETOOTH, WiFi, and/or any other suitable communication link, such as those described above with respect to communication link 130 of FIG. 1.

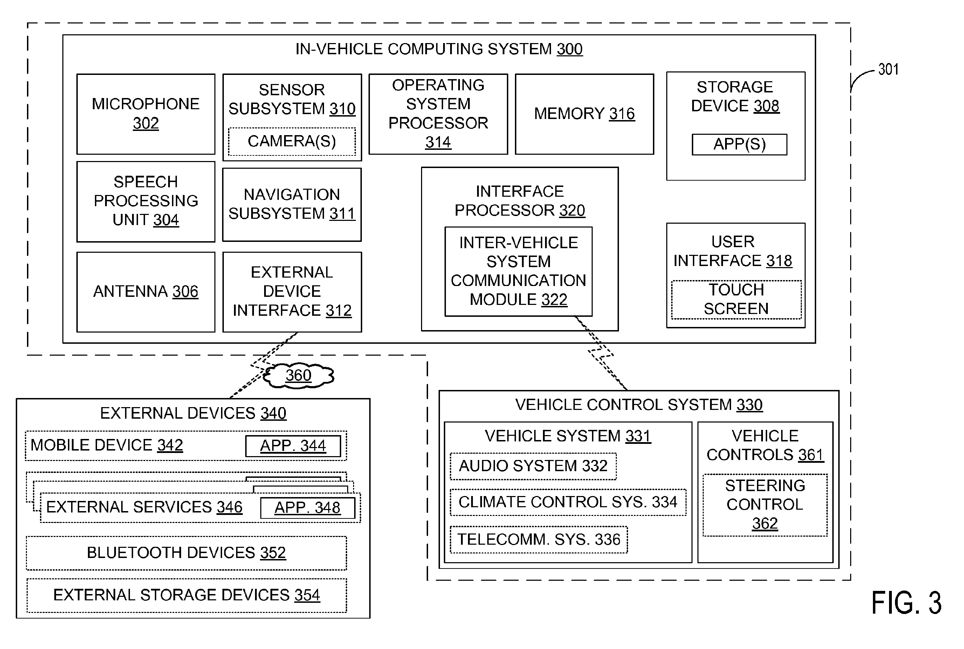

FIG. 3 shows a block diagram of an in-vehicle computing system 300 configured and/or integrated inside vehicle 301. In-vehicle computing system 300 may be an example of in-vehicle computing system 109 of FIG. 1 and/or include one or more modules/elements of the communication system 200 of FIG. 2 in some embodiments. For example, in-vehicle computing system 300 may include driver status update module 202 of FIG. 2. In some examples, the in-vehicle computing system may be a vehicle infotainment system configured to provide information-based media content (audio and/or visual media content, including entertainment content, navigational services, etc.) to a vehicle user to enhance the operator's in-vehicle experience. The vehicle infotainment system may include, or be coupled to, various vehicle systems, subsystems, hardware components, as well as software applications and systems that are integrated in, or integratable into, vehicle 301 in order to enhance an in-vehicle experience for a driver and/or a passenger.

In-vehicle computing system 300 may include one or more processors including an operating system processor 314 and an interface processor 320. Operating system processor 314 may execute an operating system on the in-vehicle computing system, and control input/output, display, playback, and other operations of the in-vehicle computing system. Interface processor 320 may interface with a vehicle control system 330 via an inter-vehicle system communication module 322.

Inter-vehicle system communication module 322 may output data to other vehicle systems 331 and vehicle control elements 361, while also receiving data input from other vehicle components and systems 331, 361, e.g. by way of vehicle control system 330. When outputting data, inter-vehicle system communication module 322 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as Global Positioning System [GPS] sensors, etc.), digital signals propagated through vehicle data networks (such as an engine controller area network [CAN] bus through which engine related information may be communicated, a climate control CAN bus through which climate control related information may be communicated, and a multimedia data network through which multimedia data is communicated between multimedia components in the vehicle). For example, the in-vehicle computing system may retrieve from the engine CAN bus the current speed of the vehicle estimated by the wheel sensors, a power state of the vehicle via a battery and/or power distribution system of the vehicle, an ignition state of the vehicle, etc. In addition, other interfacing means such as Ethernet may be used as well without departing from the scope of this disclosure.

A non-volatile storage device 308 may be included in in-vehicle computing system 300 to store data such as instructions executable by processors 314 and 320 in non-volatile form. The storage device 308 may store application data to enable the in-vehicle computing system 300 to run an application for connecting to a cloud-based server and/or collecting information for transmission to the cloud-based server. The application may retrieve information gathered by vehicle systems/sensors, input devices (e.g., user interface 318), devices in communication with the in-vehicle computing system (e.g., a mobile device connected via a Bluetooth link), etc. In-vehicle computing system 300 may further include a volatile memory 316. Volatile memory 316 may be random access memory (RAM). Non-transitory storage devices, such as non-volatile storage device 308 and/or volatile memory 316, may store instructions and/or code that, when executed by a processor (e.g., operating system processor 314 and/or interface processor 320), controls the in-vehicle computing system 300 to perform one or more of the actions described in the disclosure.

A microphone 302 may be included in the in-vehicle computing system 300 to receive voice commands from a user, to measure ambient noise in the vehicle, to determine whether audio from speakers of the vehicle is tuned in accordance with an acoustic environment of the vehicle, etc. A speech processing unit 304 may process voice commands, such as the voice commands received from the microphone 302. In some embodiments, in-vehicle computing system 300 may also be able to receive voice commands and sample ambient vehicle noise using a microphone included in an audio system 332 of the vehicle.

One or more additional sensors may be included in a sensor subsystem 310 of the in-vehicle computing system 300. For example, the sensor subsystem 310 may include a camera, such as a rear view camera for assisting a user in parking the vehicle and/or a cabin camera for identifying a user (e.g., using facial recognition and/or user gestures). Sensor subsystem 310 of in-vehicle computing system 300 may communicate with and receive inputs from various vehicle sensors and may further receive user inputs. For example, the inputs received by sensor subsystem 310 may include transmission gear position, transmission clutch position, gas pedal input, brake input, transmission selector position, vehicle speed, engine speed, mass airflow through the engine, ambient temperature, intake air temperature, etc., as well as inputs from climate control system sensors (such as heat transfer fluid temperature, antifreeze temperature, fan speed, passenger compartment temperature, desired passenger compartment temperature, ambient humidity, etc.), an audio sensor detecting voice commands issued by a user, a fob sensor receiving commands from and optionally tracking the geographic location/proximity of a fob of the vehicle, etc. While certain vehicle system sensors may communicate with sensor subsystem 310 alone, other sensors may communicate with both sensor subsystem 310 and vehicle control system 330, or may communicate with sensor subsystem 310 indirectly via vehicle control system 330. A navigation subsystem 311 of in-vehicle computing system 300 may generate and/or receive navigation information such as location information (e.g., via a GPS sensor and/or other sensors from sensor subsystem 310), route guidance, traffic information, road construction/detour information, point-of-interest (POI) identification, and/or provide other navigational services for the driver.

External device interface 312 of in-vehicle computing system 300 may be coupleable to and/or communicate with one or more external devices 340 located external to vehicle 301. While the external devices are illustrated as being located external to vehicle 301, it is to be understood that they may be temporarily housed in vehicle 301, such as when the user is operating the external devices while operating vehicle 301. In other words, the external devices 340 are not integral to vehicle 301. The external devices 340 may include a mobile device 342 (e.g., connected via a Bluetooth connection) or an alternate Bluetooth-enabled device 352. Mobile device 342 may be a mobile phone, smart phone, wearable devices/sensors that may communicate with the in-vehicle computing system via wired and/or wireless communication, or other portable electronic device(s). Other external devices include external services 346. For example, the external devices may include extra-vehicular devices that are separate from and located externally to the vehicle. Still other external devices include external storage devices 354, such as solid-state drives, pen drives, USB drives, etc. External devices 340 may communicate with in-vehicle computing system 300 either wirelessly or via connectors without departing from the scope of this disclosure. For example, external devices 340 may communicate with in-vehicle computing system 300 through the external device interface 312 over network 360, a universal serial bus (USB) connection, a direct wired connection, a direct wireless connection, and/or other communication link. The external device interface 312 may provide a communication interface to enable the in-vehicle computing system to communicate with mobile devices associated with contacts of the driver. For example, the external device interface 312 may enable phone calls to be established and/or text messages (e.g., SMS, MMS, etc.) to be sent (e.g., via a cellular communications network) to a mobile device associated with a contact of the driver (e.g., caller's mobile device 204 of FIG. 2).

One or more applications 344 may be operable on mobile device 342. As an example, mobile device application 344 may be operated to aggregate user data regarding interactions of the user with the mobile device. For example, mobile device application 344 may aggregate data regarding music playlists listened to by the user on the mobile device, telephone call logs (including a frequency and duration of telephone calls accepted by the user), positional information including locations frequented by the user and an amount of time spent at each location, etc. The collected data may be transferred by application 344 to external device interface 312 over network 360. In addition, specific user data requests may be received at mobile device 342 from in-vehicle computing system 300 via the external device interface 312. The specific data requests may include requests for determining where the user is geographically located, an ambient noise level and/or music genre at the user's location, an ambient weather condition (temperature, humidity, etc.) at the user's location, etc. Mobile device application 344 may send control instructions to components (e.g., microphone, etc.) or other applications (e.g., navigational applications) of mobile device 342 to enable the requested data to be collected on the mobile device. Mobile device application 344 may then relay the collected information back to in-vehicle computing system 300.

Likewise, one or more applications 348 may be operable on external services 346. As an example, external services applications 348 may be operated to aggregate and/or analyze data from multiple data sources. For example, external services applications 348 may aggregate data from one or more social media accounts of the user, data from the in-vehicle computing system (e.g., sensor data, log files, user input, etc.), data from an internet query (e.g., weather data, POI data), etc. The collected data may be transmitted to another device (e.g., a caller's mobile device) and/or analyzed by the application to determine a driver status or determine whether a driver status has changed and perform an action based on the context (e.g., requesting/sending data to other devices).

The external services applications 348 may additionally or alternatively send requests to in-vehicle computing system 300 for data relating to the driver status responsive to a request received from a caller's mobile device. For example, a caller potentially attempting to contact a driver (e.g., a user of in-vehicle computing system 300 and/or mobile device 342) may send a request for a status of the driver prior to establishing a phone call. Responsive to such a request, external services applications 348 may process the request to determine a driver/device identifier and send a request to in-vehicle computing system 300 for a driver status. In some embodiments, a request for a driver status may be sent to the external services application 348 and/or to the in-vehicle computing system 300 via the driver's mobile device 342.

Vehicle control system 330 may include controls for controlling aspects of various vehicle systems 331 involved in different in-vehicle functions. These may include, for example, controlling aspects of vehicle audio system 332 for providing audio entertainment to the vehicle occupants, aspects of climate control system 334 for meeting the cabin cooling or heating needs of the vehicle occupants, as well as aspects of telecommunication system 336 for enabling vehicle occupants to establish telecommunication linkage with others.

Audio system 332 may include one or more acoustic reproduction devices including electromagnetic transducers such as speakers. Vehicle audio system 332 may be passive or active such as by including a power amplifier. In some examples, in-vehicle computing system 300 may be the only audio source for the acoustic reproduction device or there may be other audio sources that are connected to the audio reproduction system (e.g., external devices such as a mobile phone). The connection of any such external devices to the audio reproduction device may be analog, digital, or any combination of analog and digital technologies.

Climate control system 334 may be configured to provide a comfortable environment within the cabin or passenger compartment of vehicle 301. Climate control system 334 includes components enabling controlled ventilation such as air vents, a heater, an air conditioner, an integrated heater and air-conditioner system, etc. Other components linked to the heating and air-conditioning setup may include a windshield defrosting and defogging system capable of clearing the windshield and a ventilation-air filter for cleaning outside air that enters the passenger compartment through a fresh-air inlet.

Vehicle control system 330 may also include controls for adjusting the settings of various vehicle controls 361 (or vehicle system control elements) related to the engine and/or auxiliary elements within a cabin of the vehicle, such as steering wheel controls 362 (e.g., steering wheel-mounted audio system controls, cruise controls, windshield wiper controls, headlight controls, turn signal controls, etc.), instrument panel controls, microphone(s), accelerator/brake/clutch pedals, a gear shift, door/window controls positioned in a driver or passenger door, seat controls, cabin light controls, audio system controls, cabin temperature controls, etc. The control signals may also control audio output at one or more speakers of the vehicle's audio system 332. For example, the control signals may adjust audio output characteristics such as volume, equalization, audio image (e.g., the configuration of the audio signals to produce audio output that appears to a user to originate from one or more defined locations), audio distribution among a plurality of speakers, etc. Likewise, the control signals may control vents, air conditioner, and/or heater of climate control system 334. For example, the control signals may increase delivery of cooled air to a specific section of the cabin.

Control elements positioned on an outside of a vehicle (e.g., controls for a security system) may also be connected to computing system 300, such as via communication module 322. The control elements of the vehicle control system may be physically and permanently positioned on and/or in the vehicle for receiving user input. In addition to receiving control instructions from in-vehicle computing system 300, vehicle control system 330 may also receive input from one or more external devices 340 operated by the user, such as from mobile device 342. This allows aspects of vehicle systems 331 and vehicle controls 361 to be controlled based on user input received from the external devices 340.

In-vehicle computing system 300 may further include an antenna 306. Antenna 306 is shown as a single antenna, but may comprise one or more antennas in some embodiments. The in-vehicle computing system may obtain broadband wireless internet access via antenna 306, and may further receive broadcast signals such as radio, television, weather, traffic, and the like. The in-vehicle computing system may receive positioning signals such as GPS signals via one or more antennas 306. The in-vehicle computing system may also receive wireless commands via RF such as via antenna(s) 306 or via infrared or other means through appropriate receiving devices. In some embodiments, antenna 306 may be included as part of audio system 332 or telecommunication system 336. Additionally, antenna 306 may provide AM/FM radio signals to external devices 340 (such as to mobile device 342) via external device interface 312.

One or more elements of the in-vehicle computing system 300 may be controlled by a user via user interface 318. User interface 318 may include a graphical user interface presented on a touch screen, such as touch screen 108 of FIG. 1, and/or user-actuated buttons, switches, knobs, dials, sliders, etc. For example, user-actuated elements may include steering wheel controls, door and/or window controls, instrument panel controls, audio system settings, climate control system settings, and the like. A user may also interact with one or more applications of the in-vehicle computing system 300 and mobile device 342 via user interface 318. In addition to receiving a user's vehicle setting preferences on user interface 318, vehicle settings selected by in-vehicle control system may be displayed to a user on user interface 318. Notifications and other messages (e.g., received messages), as well as navigational assistance, may be displayed to the user on a display of the user interface. User preferences/information and/or responses to presented messages may be performed via user input to the user interface.

FIG. 4 illustrates a chart 400 of example driver statuses and associated driver status indicators. An indication of a driver's status may be displayed at a caller's mobile device utilizing the illustrated example icons. It is to be understood that the driver statuses, indicators, and icons are exemplary in nature and not exhaustive, and any suitable number/designations of driver statuses may be utilized without departing from the scope of this disclosure. A first example driver status is "stationary," which may be indicated by a vehicle speed that is equal to 0 mph. Additionally or alternatively, a stationary status may be determined based upon an idling engine, an arrival at a programmed destination (e.g., programmed at a navigation system of the vehicle/driver's mobile device), etc. As stated above, the illustrated associated icon, in this example a traffic light, is representative and may be replaced with any suitable icon indicating a stationary driver status.

The next driver status example illustrated in FIG. 4 relates to being "stuck in traffic." This driver status may be indicated by a speed between a range of 0 and 5 mph, a detection of traffic/road construction/detours/etc. (e.g., via externally-directed sensors such as cameras, the navigation system and associated traffic information source, crowd sourced information from other nearby vehicles, etc.), erratic acceleration profiles (e.g., indicative of "stop and go" movement encountered in heavy traffic situations), and/or any other indication that the driver is affected by traffic on the roadway. In some examples, different types of traffic may be differentiated from one another. For example, if stuck in heavy/stopped traffic that results in long periods of slow or no movement, a driver may be able to take a phone call. However, in erratic stop and go traffic, a driver may be too distracted by a phone call to concentrate on driving safely. Thus, separate traffic statuses may be provided to allow further guidance regarding a driver's ability to receive a phone call or other correspondence.

A driving status of "in city driving" may be indicated by a speed that falls between 5 and 35 mph (or other suitable typical city speed limits), by detecting an environment that matches a city (e.g., imaging large buildings, detecting frequent traffic lights/intersections, detecting pedestrians, etc.), by determining that a driver's location falls within a city (e.g., based upon a GPS or navigation system of the vehicle and/or driver's mobile device), and/or by detecting any other suitable indicator of driving in a city. A "highway" driving status may be indicated by a speed that falls between 35 and 65 mph (or other suitable typical highway speed limits), by detecting a smooth, steady, and/or low acceleration profile indicating driving at a steady speed, by determining that a location of the vehicle/driver matches a highway or interstate, and/or by detecting any other suitable indicator of driving on a highway. A "speeding" driving status may be indicated based on a speed being greater than a speeding threshold (e.g., 65 mph and/or any other suitable typical/average speed limit or determined speed limit for a user's location).

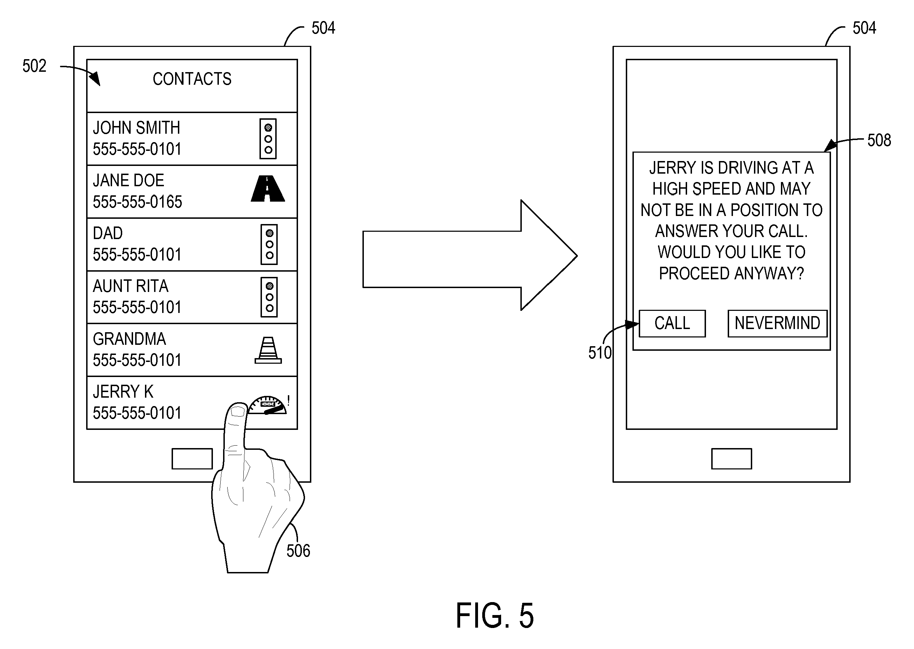

FIG. 5 shows an example user interface 502 for a caller's mobile device 500 showing a contact list and associated driver statuses for users on the contact list. As illustrated, each entry in the contact list of the user interface 502 may include a driver identifier (e.g., a name/nickname), driver contact information (e.g., a phone number), and a driver status (e.g., an icon representing a current or last-known status of the driver). It is to be understood that the information in the contact list illustrated in FIG. 5 is exemplary in nature and additional/alternative information may be displayed for each contact.

User selection of a contact entry may be provided in any suitable manner, such as by touch input provided by a hand 506 of the caller. Responsive to user selection of a contact entry (e.g., indicating an intent of the caller to establish a phone call to the contact associated with that entry), a message 508 may be displayed. For example, responsive to selecting a contact with a driver status of "speeding" (e.g., as indicated by the speedometer icon), message 508 may present text indicating more information of the driver's (e.g., contact's) status and/or an indication of the driver's availability to answer a phone call at that time based on the driver's status. Message 508 may also include one or more selectable user interface controls 510 to enable the caller to progress from the message. For example, a user interface control 510 may be utilized to proceed with a call to the driver/contact regardless of the driver's status or to cancel the call (e.g., by selecting the button labeled "Nevermind"). Additional or alternative user interface buttons may be provided in the message, such as a button to send an alternative type of message (e.g., send an SMS/MMS message or email or directly accessing the driver's voice mail instead of calling).

In some embodiments, message 508 may be provided as a standalone message to replace the contact list. In other embodiments, message 508 may be provided as a pop-up message overlaying the contact list. Deployment and text/content (e.g., user interface buttons) of message 508 may be dependent on a driver status of a contact selected by the caller. For example, if the caller selects a contact that is stationary, message 508 may not be shown, allowing the caller to establish the call directly from the contact list while bypassing message 508. If the caller selects a contact that does not have an associated driver status (or has an outdated driver status that has not been updated in a threshold amount of time), message 508 may be bypassed or a different message may be presented indicating that the driver status is unknown/out of date and a phone call may or may not be disruptive.

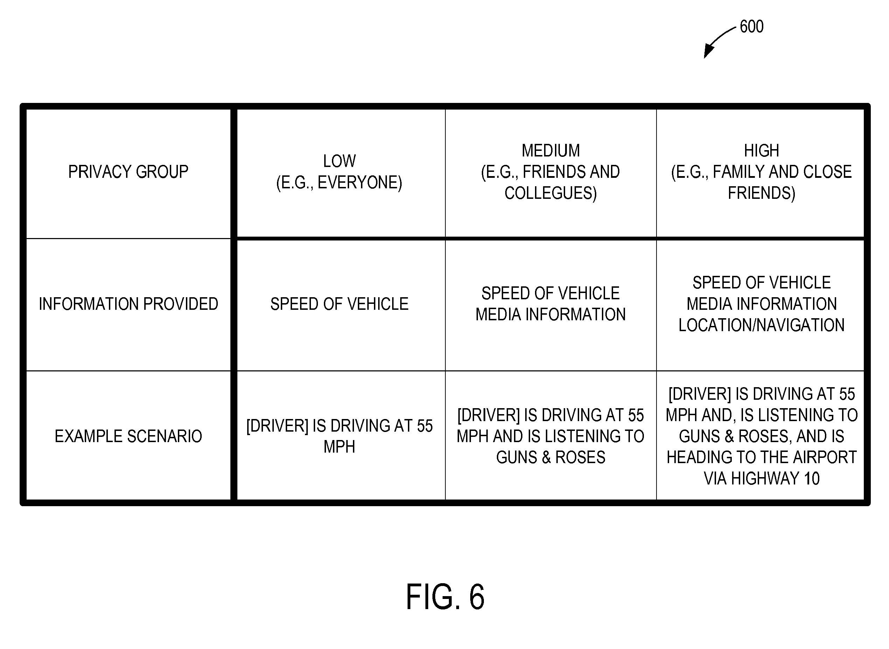

Additional information may be shown in message 508 and/or on the contact list of user interface 502 where available. For example, FIG. 6 illustrates a chart 600 of different privacy groups and associated information provided to callers belonging to the different privacy groups. It is to be understood that the privacy groups and associated information provided to callers at each privacy group are exemplary in nature and any number/type of privacy group may be utilized. In the illustrated example, a low privacy group may serve as a default privacy group used for every type of caller. Only a speed of the driver's vehicle may be provided to a caller included in this privacy group. For example, the information in a driver status message (e.g., message 508 of FIG. 5) for a caller having no particular relationship to the driver may include only an indication of the driver's speed. For a caller at the medium privacy group (e.g., friends and colleagues of the driver), an indication of the speed of the vehicle as well as media information (e.g., a currently-playing song/genre of music for the driver) may be provided in a driver status message. For a caller at the high privacy group (e.g., family and close friends), a speed of the vehicle, media information, and location/navigation information may be provided in a driver status message. The privacy groups and associated information decimation may be automatically selected and/or user (e.g., driver) controlled. For example, a driver may select the types of information provided to contacts at each privacy group and/or assign different contacts to different privacy groups. The user (e.g., the driver) may also provide a default privacy group for any caller that is not in the user's contact list. In some embodiments, a privacy group may not allow any information of the driver to be provided or simply an indication of the driver status (e.g., an icon) with no further information indicating the reason for that status. The information about the driver that is provided to a given caller (e.g., based on that caller's privacy group for the driver) may be available only in the driver status message or may be readily available (e.g., included in the contact list of that caller).

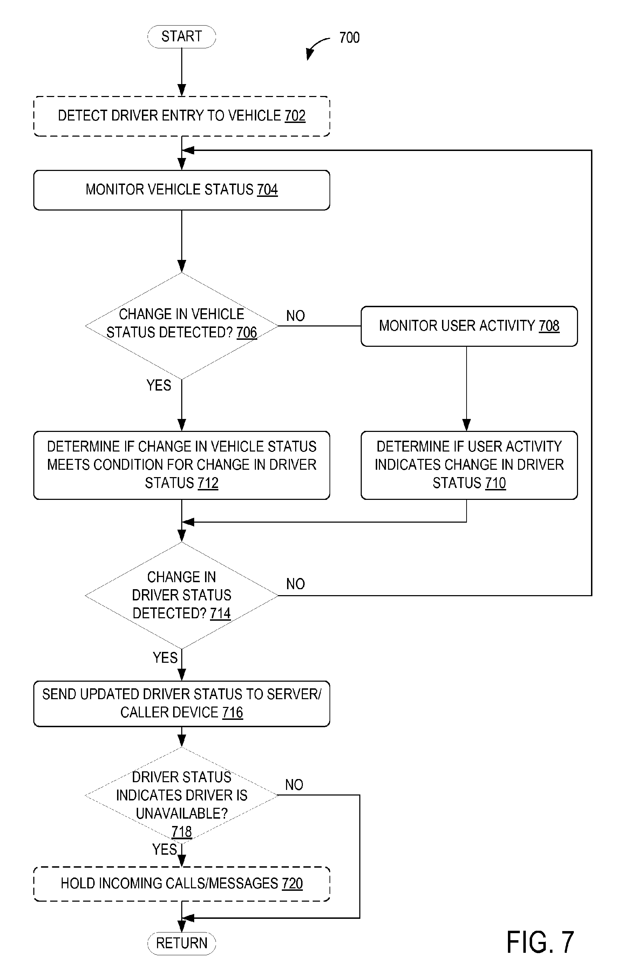

FIG. 7 is a flow chart of a method 700 for providing a driver status from a vehicle (e.g., an in-vehicle computing system such as in-vehicle computing system 109 of FIG. 1 or other driver-related device) to a server or caller device (e.g., server 218 or caller's mobile device 204 of FIG. 2). At 702, method 700 optionally includes detecting a driver entering the vehicle. For example, a door event, key/ignition event, driver seat pressure change, radiofrequency device detection, and/or other suitable indicator may be utilized to determine that a driver has entered the vehicle. Such an indicator may be utilized to initialize a driver status and/or provide a driver status update. At 704, method 700 includes monitoring the vehicle status. For example, vehicle systems/sensors may be monitored by the in-vehicle computing system. A change in vehicle status (e.g., a change in engine operation, vehicle speed, etc.) may indicate a change in the driver's status. Accordingly, method 700 includes determining if a change in vehicle status is detected at 706. If no vehicle status change is detected (e.g., "NO" at 706), the method proceeds to 708 to monitor user activity. For example, user activity such as user interaction with the vehicle/in-vehicle computing system/driver's mobile device may indicate a driver's current or planned activities and availability to receive a phone call. Based on the monitored user activity, a determination is made at 710 as to whether the user activity indicates a change in driver status. If a change in vehicle status is detected (e.g., "YES" at 706), the method proceeds to 712 to determine if the change in vehicle status meets a condition for a change in driver status. For example, a change in vehicle status from idling to moving at a speed that is greater than 0 mph may indicate a change in driver status, while a vehicle status change from idling to shut down may not indicate a change in driver status. At 714, method 700 includes determining if a change in driver status is detected. If a driver status change is not detected (e.g., "NO" at 714), the method returns to 704 to continue monitoring the vehicle status. If a driver status change is detected (e.g., "YES" at 714), the method proceeds to 716 to send an updated driver status to a server and/or caller device.

Method 700 may optionally include determining if the driver status indicates that the driver is unavailable, as indicated at 718. For example, some driver statuses, such as "speeding" and "stuck in traffic" as described in FIG. 4, may indicate an increased cognitive load on the driver that renders the driver unavailable for answering phone calls/messages. Conversely, a status of "stationary" may indicate that the driver is available to take phone calls/messages without exceeding a cognitive load limit while driving. If the driver status does not indicate that the driver is unavailable (e.g., "NO" at 718), the method returns to continue monitoring the vehicle status. If the driver status does indicate that the driver is unavailable (e.g., "YES" at 718), the method proceeds to 720 to hold incoming phone calls/messages. For example, the calls/messages may be held until the driver status changes to an available status. In some embodiments, holding the incoming calls and messages may include sending a control message to a mobile device of the driver instructing the mobile device to suppress notifications for incoming calls and messages or sending incoming calls straight to a voice mailbox. In other embodiments, holding the incoming calls and messages may include suppressing notifications or otherwise preventing the incoming calls from being received/handled at the in-vehicle computing system.

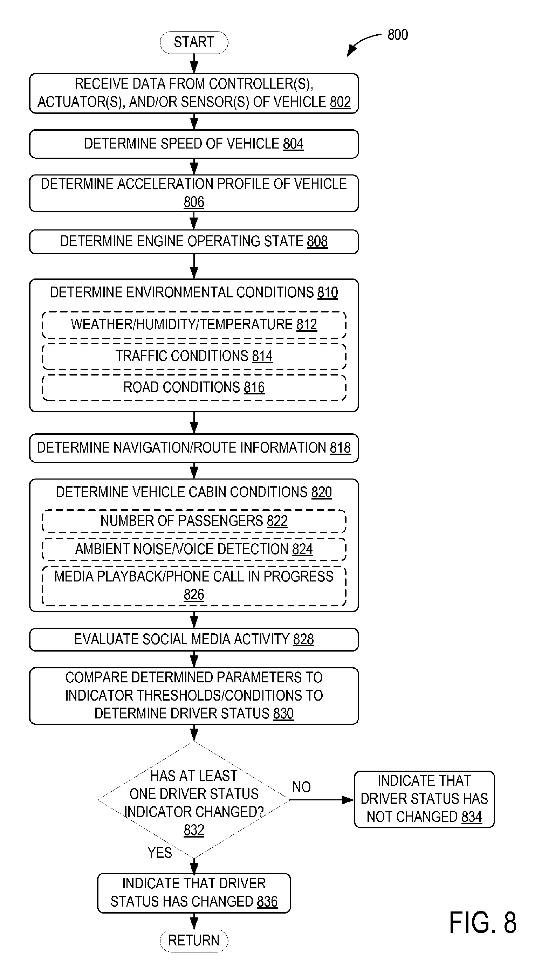

FIG. 8 is a flow chart of a method 800 for determining a change in driver status. For example, method 800 may be performed by an in-vehicle computing system, such as in-vehicle computing system 109 of FIG. 1. It is to be understood that in some embodiments, portions of method 800 may be performed by a driver's mobile device and/or by a server. For example, data from the vehicle may be collected/aggregated by the in-vehicle computing system and sent to the driver's mobile device and/or server for further processing/aggregation.

At 802, method 800 includes receiving data from one or more controllers, actuators, and/or sensors of the vehicle. Such data may be utilized to determine information regarding the operation of the vehicle, ambient/cabin conditions for the vehicle, user input to the vehicle, etc. Based on the received data, a speed of the vehicle is determined at 804, an acceleration profile of the vehicle is determined at 806, and an engine operating state is determined at 808. Vehicle speed, acceleration, and engine operating state may be utilized to determine a vehicle status, which may further provide an indication regarding the driver's status. For example, the acceleration profile of the vehicle may indicate that the driver is traversing stop and go traffic, which may put an increased cognitive load on the driver. Environmental conditions are determined at 810. The environmental conditions may include weather, humidity, and/or temperature, as indicated at 812, traffic conditions, as indicated at 814, road conditions, as indicated at 816, and/or any other suitable environmental conditions. For example, a camera may image an environment of the vehicle, the resulting images revealing an environmental condition (e.g., bad weather, heavy traffic, poor roads/construction, etc.) that affects an amount of concentration that a driver may direct toward driving.

At 818, method 800 includes determining navigation/route information. For example, a distance to a driver's destination may indicate an upcoming change in the driver's status. At 820, method 800 includes determining vehicle cabin conditions. For example, a number of passengers may be determined at 822, an ambient noise level/voice detection at 824, and media playback/in-progress communications at 826. At 828, social media activity may be determined. For example, an in-vehicle computing system may request data from a social networking database to determine recent or historical trends in social media activity for the driver. In some examples, information pertaining to user activity, such as calendar entries/appointments, emails and other messages, etc., may be used to determine information regarding current, historical, and upcoming activities of the driver.

At 830, method 800 includes comparing the determined parameters to indicator thresholds/conditions for driver statuses to determine the driver status. For example, each possible/candidate driver status may have an associated range of speeds. By comparing a current speed of the vehicle with the different ranges of speeds, the current speed may be matched with a speed indicator for a driver status. In some embodiments, a given driver status may be selected based on multiple indicators and/or may include multiple indicators, all or a subset of which must be met for the driver to be assigned that status. For example, indicators for a given status may be ranked or otherwise assigned an importance level (e.g., required or not required) and a particular number or combination of the importance levels must be met for the driver to be assigned that status.

For example, a driver status of "stuck in traffic" may have indicators include a vehicle speed range, an acceleration profile (e.g., a number of acceleration changes within a time period being above a threshold or having a magnitude above a threshold), a detection of traffic via a camera, and a detection of traffic via a navigation/traffic system. The acceleration profile may have a highest level of importance, while the other indicators may have a secondary level of importance. In this example, the "stuck in traffic" driver status may not be met without meeting the acceleration profile and at least one of the secondary indicators. Thus, if a vehicle speed is not within the indicated range, but an acceleration profile is met and traffic is detected via a navigation system, the driver status may be indicated as "stuck in traffic." If the vehicle speed is within the indicated range and traffic is detected by the navigation system and camera, but the acceleration profile is not met, the driver status may not be determined to be "stuck in traffic." The above-described factors may be evaluated at 830 in order to determine a driver status. The above-described example is provided to illustrate different criteria for different driver statuses and is not intended to be limiting in any sense.

At 832, method 800 includes determining if at least one of the driver status indicators has changed. It is to be understood that the method may further include determining if at least one of the determined parameters and/or the driver status has changed at 832. For example, the driver status and associated indicators determined at 830 may be compared to a previously-determined driver status/indicators to determine if the status/indicators have changed. As the driver status indicators (e.g., a speed of the vehicle) may be reported to some callers as an explanation of the driver's status, the in-vehicle computing system may send an indication of changes in both the driver status and the driver status indicators to a server in order to maintain up-to-date information regarding the driver's status. Accordingly, if at least one driver status indicator has not changed (e.g., "NO" at 832), the method proceeds to 834 to indicate that the driver status has not changed. Such an indication may be used at 714 of method 700 in FIG. 7 to determine whether a change in driver status is detected. If at least one driver status indicator has changed (e.g., "YES" at 832), the method proceeds to 836 to indicate that the driver status has changed. Again, the indication of a change in driver status may be used at 714 of FIG. 7 to determine whether a change in driver status is detected (e.g., to determine whether an update is to be sent to the server).

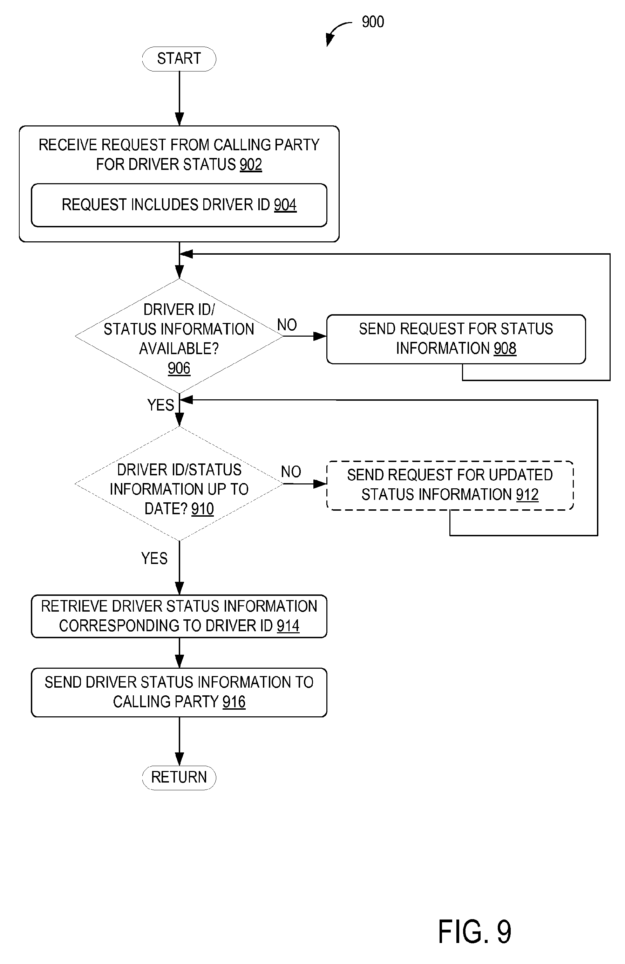

FIG. 9 is a flow chart of a method 900 in a server for retrieving and sending driver status information. At 902, the method includes receiving a request from a calling party (e.g., via a caller's mobile device) for a driver status associated with a corresponding driver. The request may include an identifier for the driver or the driver's mobile device, as indicated at 904. At 906, the method includes determining whether the driver ID and associated status information are available. If the driver ID or status information is not available (e.g., "NO" at 906), the method proceeds to 908 to send a request to an in-vehicle computing system or other driver device for status information. If the driver ID and status information is available (e.g., "YES" at 906), the method optionally proceeds to 910 to determine whether the driver ID and/or status information are up to date. For example, all status information received before a threshold time relative to the request time may be considered to be out of date. The driver ID/status information may be tagged with a receipt time (e.g., based on timestamps from the sending party or timestamps set at the server at time of receipt), which may be compared to a current time to indicate whether the driver ID/status information is up to date.

The threshold time may be static (e.g., 5 minutes prior to a request time) or may vary based on a stored driver status type. For example, a driver status of stationary may have a longer threshold time than a driver status of speeding, as a driver may be stationary for long periods of time, but may exit a speeding condition rapidly. Setting a longer threshold may reduce the number of updates requested by the server during periods in which frequent changes to vehicle status may be unlikely. In other examples, driver statuses that indicate that it may be safe to call may have shorter thresholds than other statuses, as the danger of calling when the driver is not actually able to take the call may be more important than the inconvenience of not calling when the driver is actually able to take the call. Utilizing a shorter threshold for "safe-to-call" statuses may ensure that such statuses are accurate and up to date before recommending that a caller establishes the communication.

If the driver ID/status information is not up to date (e.g., "NO" at 910), the method may proceed to 912 to send a request (e.g., to the in-vehicle computing system) for updated status information. If the driver ID/status information is up to date (e.g., "YES" at 910), the method may proceed to 914 to retrieve the stored driver status information corresponding to the driver ID. At 916, the method includes sending the driver status information to the calling party. As described above with respect to FIG. 8, the driver status may include and/or be based upon one or more indicators (e.g., vehicle status/speed/acceleration profile, engine operating state, environmental conditions, navigation/location information, vehicle cabin conditions, social media activity/user activity, etc.). Accordingly, sending the driver status information to the calling party may include sending the indicators of the driver status to the calling party. As described above with respect to FIG. 6, the information provided to the calling party may be based on a privacy level associated with that calling party.

The information provided may additionally or alternatively be based on a status of the calling party (e.g., relative to the called party). For example, if the calling party has a calendar entry related to the called party (e.g., an appointment at a location and/or time proximate the current location/time of the calling party/called party), the driver status information provided to the calling party may include information from the calendar entry (e.g., from the calendar of the calling party and/or the called party), as well as information regarding a location of the called party, and estimated time of arrival of the called party, etc. Upon retrieving/viewing a contact list entry for the called party and/or attempting to initiate a call to the called party, the calling party may receive an indication of the calendar item and the location of the called party. In this way, the calling party may determine whether a reminder of the calendar item (e.g., a reminder of an upcoming appointment) would be helpful or whether the called party is driving to the location associated with the calendar item and thus reminding the called party would be distracting. In other words, based on the driver status information, the calling party may decide whether to call the called party. In the example described above, the driver status information may be provided to the calling party responsive to a relationship between a current time and/or location of the called party relative to a time/location of a calendar entry relevant to both the called party and the calling party. For example, the driver status information may be automatically provided to the calling party (e.g., as a notification, without the calling party attempting to call or view a contact entry associated with the called party). In this way, the calling party may be informed in the case that the called party is likely to be early or late to the event, and/or otherwise be reminded of the calendar entry.

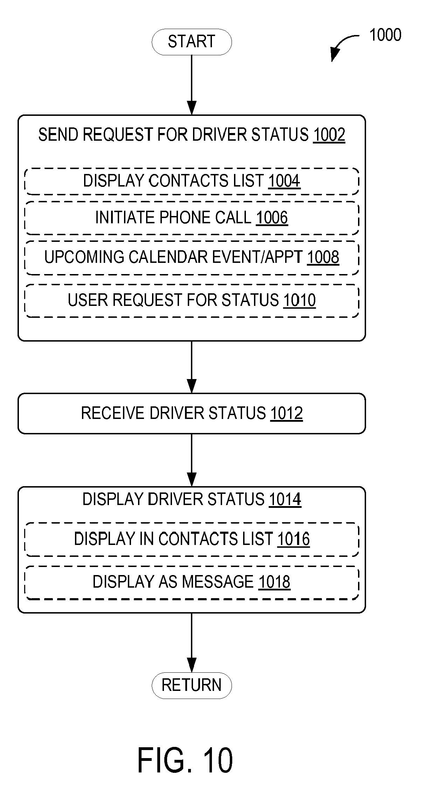

FIG. 10 is a flow chart of a method 1000 for requesting and receiving status updates for a driver. For example, method 1000 may be performed by a caller's mobile device, such as caller's mobile device 204 of FIG. 2 and/or mobile device 504 of FIG. 5. At 1002, method 1000 includes sending a request for a driver's status. The request may be automatically initiated by displaying a contacts list at the mobile device, as indicated at 1004, by initiating a phone call to the driver, as indicated at 1006, based on a driver's involvement in an upcoming calendar event/appointment, as indicated at 1008, by a user's direct request for the driver's status information, as indicated at 1010, and/or by any other suitable trigger. The request may be sent to a server or to the driver (e.g., the driver's mobile device)/driver's vehicle (e.g., an in-vehicle computing system in the driver's vehicle) directly.

At 1012, method 1000 includes receiving the driver status. For example, the driver status may be received from a server responsive to the server performing 916 in method 900 of FIG. 9. At 1014, method 1000 includes displaying the driver status. For example, the driver status may be displayed on a display of the caller's mobile device in a contacts list, as indicated at 1016 and/or as a message, as indicated at 1018. Examples of each mechanism of display are illustrated in FIG. 5.

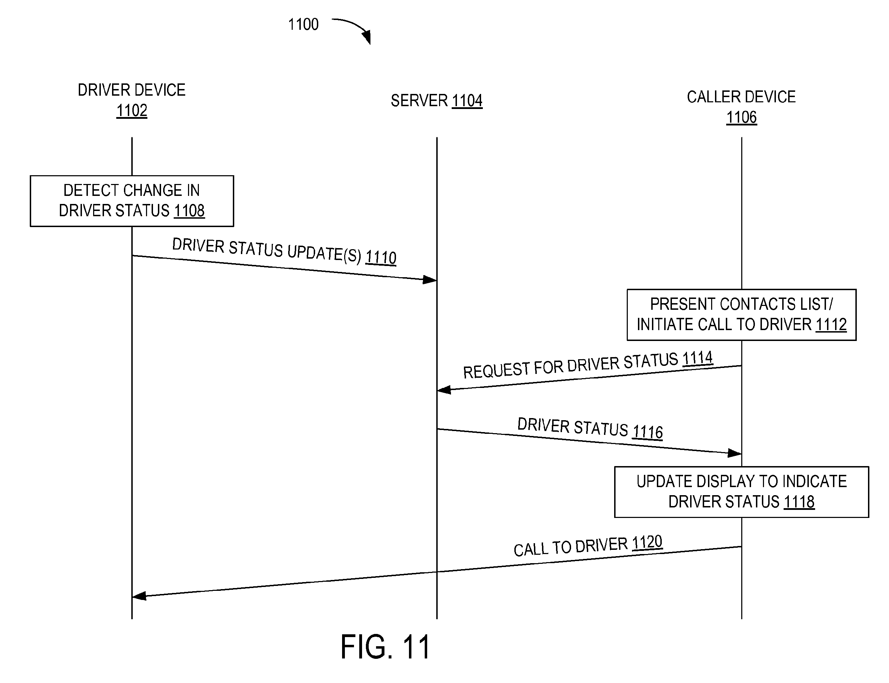

FIG. 11 is a communication diagram 1100 showing an example scenario for indicating a driver status. The illustrated communications may occur between a driver's device 1102 (e.g., in-vehicle computing device 109 of FIG. 1 and/or driver's mobile device 206 of FIG. 2), a server 1104 (e.g., server 218 of FIG. 2), and a caller device 1106 (e.g., caller's mobile device 204 of FIG. 2). At 1108, a change in driver status may be detected at the driver device. In response, a driver status update 1110 is sent to server 1104 from driver device 1102. As described above, the driver status update may include the driver status and/or one or more indicators used to determine the driver status. At 1112, caller device 1106 attempts to present a contacts list and/or initiate a call to the driver. In response, a request for driver status 1114 is sent to server 1104 from caller device 1106. The request may include an identifier of the driver. Based on the request, the server 1104 sends a driver status 1116 to the caller device. Caller device 1106 updates the display to indicate the driver status at 1118. In response, the caller device places the call to driver 1120. It is to be understood that the driver device 1102 may selectively represent an in-vehicle computing device and/or a driver's mobile device in diagram 1100 for ease of viewing. Accordingly, while the detection of a change in driver status and the sending of driver status updates may be performed by an in-vehicle computing device, the call to the driver may be sent to (and received by) a driver's mobile device (different from the in-vehicle computing system).

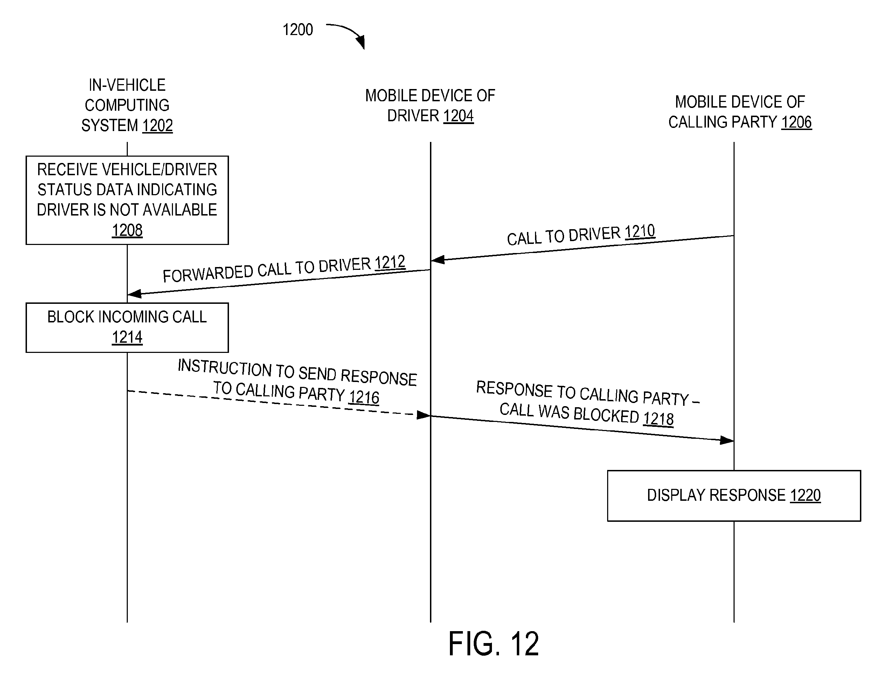

FIG. 12 is a communication diagram 1200 illustrating example communications between an in-vehicle computing system 1202 of a vehicle, a mobile device of a driver 1204 (e.g., located within the vehicle and remote from the in-vehicle computing system), and a mobile device of a calling party 1206 (e.g., located remote from the vehicle and/or the mobile device of the driver 1204). At 1208, the in-vehicle computing system receives vehicle and/or driver status data indicating that the driver is not available to receive phone calls. For example, the in-vehicle computing system may receive data via a CAN bus indicating that the driver is travelling at a high speed and thus would be distracted by an incoming phone call. A call to the driver 1210 is initiated from the mobile device of the calling party and sent to the mobile device of the driver. The mobile device of the driver may be communicatively connected to the in-vehicle computing system and instructed to route all incoming phone calls to the in-vehicle computing system (e.g., responsive to a user setting). Accordingly, a forwarded call to the driver 1212 may be transmitted from the mobile device of the driver to the in-vehicle computing system.

As indicated at 1208, the last-known driver status received and/or determined at the in-vehicle computing system indicated that the driver is not available to take calls. Accordingly, the incoming call comprising the forwarded call to the driver 1212 is blocked at 1214. For example, the in-vehicle computing system may suppress or alter a notification of the incoming call or otherwise stop the call from reaching the driver. In some embodiments, the in-vehicle computing system may store information regarding the incoming/forwarded call (e.g., a call time, a calling party/calling party device identifier, a call type, etc.) and selectively present the information after blocking the call. For example, when the vehicle/driver status changes to indicate that the driver is available to receive calls, the information of any blocked calls may be presented to the driver.

Responsive to blocking the call, the in-vehicle computing system may send a response to the mobile device of the calling party indicating that the call was blocked. For example, the in-vehicle computing system may send an instruction to the mobile device of the driver to send the response to the calling party as indicated at 1216 and/or the in-vehicle computing system may send the response to the calling party directly (e.g., bypassing the mobile device of the driver). Accordingly, the mobile device of the calling party may receive the response to the calling party 1218 from the in-vehicle computing system and/or from the mobile device of the driver. At 1220, the mobile device of the calling party may display the response to inform the calling party that the call was blocked and/or to provide any other suitable information regarding the reason that that call was blocked (e.g., a type of vehicle or driver status data that resulted in the determination that the driver is not available), all or a portion of the vehicle/driver status data, etc.

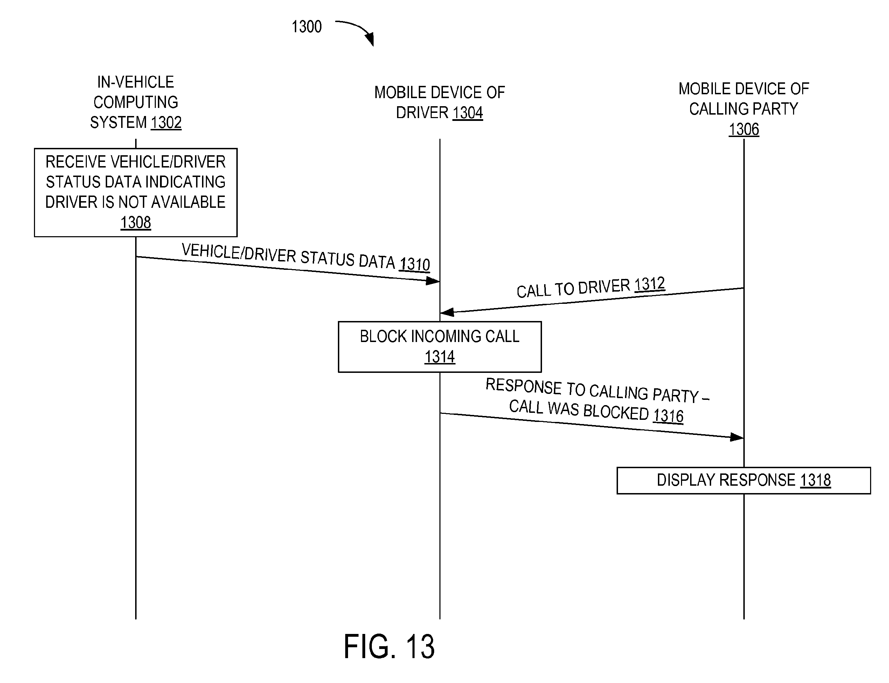

FIG. 13 is a communication diagram 1300 illustrating example communications between an in-vehicle computing system 1302 of a vehicle, a mobile device of a driver 1304 (e.g., located within the vehicle and remote from the in-vehicle computing system), and a mobile device of a calling party 1306 (e.g., located remote from the vehicle and/or the mobile device of the driver 1304). At 1308, the in-vehicle computing system receives vehicle and/or driver status data indicating that the driver is not available to receive phone calls. For example, the in-vehicle computing system may receive data via a CAN bus indicating that the driver is travelling at a high speed and thus would be distracted by an incoming phone call. The in-vehicle computing system sends vehicle/driver status data 1310 and/or an indication of the driver status that is determined based on the vehicle/driver status data to the mobile device of the driver.

The mobile device of the calling party initiates a call to the driver 1312. As the last received vehicle/driver status data/driver status indicates that the driver is not available, the mobile device of the driver blocks the incoming call at 1314. A response to the calling party indicating that the call was blocked 1316 is sent from the mobile device of the driver to the mobile device of the calling party responsive to blocking the call. At 1318, the response is displayed at the mobile device of the calling party.

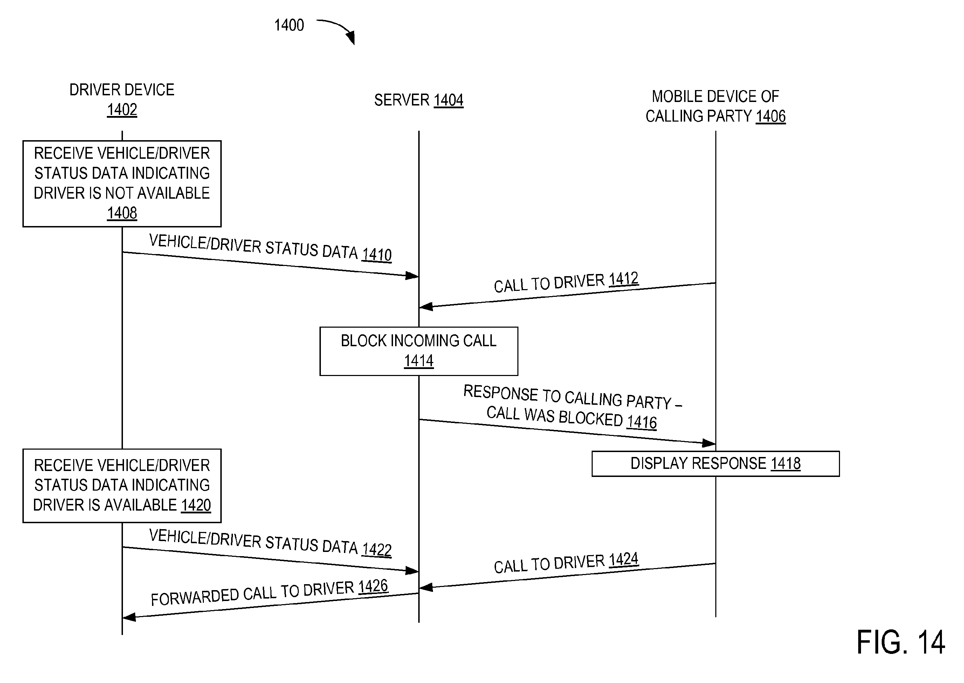

FIG. 14 is a communication diagram 1400 illustrating example communications between a driver device 1402 (e.g., an in-vehicle computing system and/or a mobile device of the driver, as indicated below), a server 1404 (e.g., located remote from the driver device(s)), and a mobile device of a calling party 1406 (e.g., located remote from the vehicle and/or the mobile device of the driver 1402). At 1408, the in-vehicle computing system receives vehicle and/or driver status data indicating that the driver is not available to receive phone calls. For example, the in-vehicle computing system may receive data via a CAN bus indicating that the driver is travelling at a high speed and thus would be distracted by an incoming phone call.

The vehicle/driver status data 1410 and/or an indication of the driver status is sent to the server 1404 from the driver device (e.g., the in-vehicle computing system and/or the in-vehicle computing system via the mobile device of the driver). The mobile device of the calling party initiates a phone call to the driver by sending a call to the driver 1412 to the server 1404. As the last-received vehicle/driver status data and/or driver status indicated that the driver is not available, the server blocks the incoming call at 1414. For example, blocking the incoming call may include preventing the incoming call from reaching the driver and/or the driver device(s). In some embodiments, information of the call (e.g., a call time, a calling party/calling party device identifier, a type of call, etc.), may be stored at the server 1404 and provided to the driver device(s) at a later time (e.g., when the driver is available, responsive to reaching a threshold period of time, responsive to blocking a threshold number of calls, responsive to the driver reaching a final destination, etc.). In some embodiments, the information regarding the call may be sent to the driver device(s) responsive to blocking the call (e.g., immediately after blocking the call) in order to allow the driver to return the call at the driver's convenience. For example, the information may be displayed at the in-vehicle computing system and/or the driver's mobile device as an indication of a blocked call and/or details for returning the call or changing a blocking setting (e.g., changing the vehicle/driver status data thresholds associated with the driver's availability determination).

A response to the calling party indicating that the call was blocked 1416 is sent from the server to the mobile device of the calling party responsive to blocking the call. At 1418, the mobile device of the calling party displays the response. At 1420, vehicle/driver status data is received (e.g., at an in-vehicle computing system and/or at a mobile device of the driver via the in-vehicle computing system) indicating that the driver is available. For example, the vehicle may have stopped for a threshold period of time (e.g., the vehicle speed equaling 0 mph). The vehicle/driver status data 1422 may be sent from the driver device(s) to the server to indicate the change in driver status. Thereafter, a call to the driver 1424 may be initiated by the mobile device of the calling party and sent to the server. As the last-received driver status information indicated that the driver was available, the server sends the forwarded call to the driver 1426 to the driver device(s) (e.g., the mobile device of the driver and/or the in-vehicle computing system). In this way, the call may not be blocked (e.g., may be allowed to reach the driver) based on the vehicle/driver status data.

Providing a real-time indication of a driver's status as described above may allow a calling party to evaluate a driver's ability to receive a phone call prior to making the call. As a result, the distraction to the driver may be minimized when the caller takes a concentrated approach to only contact the driver when the driver is able to take the call without exceeding the driver's cognitive load limit. By leveraging information from a vehicle's systems, in addition to other information sources, an in-vehicle computing system and/or other suitable computing device may determine the driver's status in an accurate and real-time manner.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the in-vehicle computing system 109 and/or driver status update module 202 described with reference to FIGS. 1 and 2. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and subcombinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The following claims particularly point out subject matter from the above disclosure that is regarded as novel and non-obvious.

## Claims

1. A method for managing calls to a driver of a vehicle, the method comprising:
receiving vehicle status data from one or more vehicle systems and sensors;
selectively blocking an incoming call from a calling party to the driver based on the vehicle status data; and
sending a response to the calling party responsive to blocking the incoming call, the response including at least one of an indication that the incoming call was blocked, a reason for blocking the incoming call, and the vehicle status data.

2. The method of claim 1, wherein the vehicle status data is received at a mobile device of the driver from an in-vehicle computing system of the vehicle, the mobile device of the driver being located within the vehicle, and wherein the response to the calling party is sent from the mobile device of the driver to the calling party.

3. The method of claim 1, wherein the vehicle status data is received at an in-vehicle computing system from the one or more vehicle systems and sensors and a notification of the incoming call is received at the in-vehicle computing system from a mobile device of the driver, and wherein selectively blocking the incoming call from the calling party comprises blocking the incoming call at the in-vehicle computing system and sending a control instruction from the in-vehicle computing system to the mobile device of the driver to send the response to the calling party responsive to blocking the incoming call.

4. The method of claim 1, wherein the vehicle status data is received at a remote server located remotely from the vehicle, the method further comprising determining a driver status based on the vehicle status data and selectively sending an indication of the driver status to a mobile device of the calling party.

5. The method of claim 4, wherein the remote server selectively blocks the incoming call from reaching the driver based on the driver status and sends the response to the calling party responsive to blocking the incoming call.

6. The method of claim 1, wherein blocking the incoming call comprises suppressing a notification of the incoming call at one or more of an in-vehicle computing system of the vehicle and a mobile device of the driver.

7. An in-vehicle computing system of a vehicle, the in-vehicle computing system comprising:
a display;
a processor;
a storage device that stores instructions executable by the processor to:
receive vehicle status data from one or more vehicle systems and sensors;
determine one or more parameters of operation for the vehicle based on the received vehicle status data;
compare the one or more parameters of operation for the vehicle to one or more driver status indicator;
determine a driver status of a driver of the vehicle based on the comparison of the parameters to the driver status indicators; and
selectively send the driver status to a remote device, the remote device being located remotely from the vehicle.

8. The in-vehicle computing system of claim 7, wherein the vehicle status data is received via a controller area network (CAN) bus of the vehicle.

9. The in-vehicle computing system of claim 7 or 8, wherein the one or more parameters of operation for the vehicle includes a vehicle speed and the one or more driver status indicator thresholds includes a plurality of vehicle speed ranges, each speed range being associated with a different driver status.

10. The in-vehicle computing system of any of claims 7 - 9, wherein the remote device comprises a server and wherein the instructions are further executable to compare the driver status to an immediately prior determined driver status, send the driver status to the server when the driver status is different from the immediately prior determined driver status, and not send the driver status to the server when the driver status is the same as the immediately prior determined driver status.

11. The in-vehicle computing system of any of claims 7 - 10, wherein the instructions are further executable to perform at least one of:
detecting a driver entry into the vehicle and initiate the determination of the driver status responsive to detecting the driver entry;
monitoring user activity in the vehicle or on a social media network, and wherein determining the driver status is further based on the user activity;
selectively blocking incoming calls based on the vehicle status data.

12. The in-vehicle computing system of claim 11, wherein blocking the incoming calls and messages comprises sending a control message to a mobile device of the driver instructing the mobile device of the driver to suppress notifications for incoming calls and messages and to send a response to the calling parties that establish the incoming calls indicating that the incoming calls were blocked.

13. The in-vehicle computing system of any of claims 7 - 12, wherein the storage device further stores an association of each of a plurality of candidate driver statuses with a plurality of driver status indicators, each candidate driver status being met responsive to parameters of operation for a vehicle meeting all or a subset of the plurality of driver status indicators.

14. The in-vehicle computing system of claim 13, wherein for each candidate driver status, the associated driver status indicators are ranked with an importance level indicating whether meeting that driver status indicator is required for that candidate driver status.

15. The in-vehicle computing system of any of claims 7 - 14, wherein the remote device is one or more of a server and a mobile device of a calling party and wherein the instructions are further executable to selectively send one or more of the parameters of operation for the vehicle to the remote device.
